# FASCICULE DE BREVET EUROPEEN

(11) **EP 3 719 279 B1**
(45) Date de publication et mention de la délivrance du brevet: **27.07.2022**
(21) Numéro de dépôt: 20165558.6
(22) Date de dépôt: 25.03.2020
(51) Int. Cl.: F02C 7/14

(54) **ÉCHANGEUR DE CHALEUR SURFACIQUE POUR SYSTÈME DE REFROIDISSEMENT DE TURBORÉACTEUR POUR AÉRONEF**
OBERFLÄCHENWÄRMETAUSCHER FÜR KÜHLSYSTEM EINES TURBOTRIEBWERKS FÜR LUFTFAHRZEUG
SURFACE HEAT EXCHANGER FOR JET ENGINE COOLING SYSTEM FOR AN AIRCRAFT

(30) Priorité: 03.04.2019 FR 1903540
(43) Date de publication de la demande: 07.10.2020
(73) Titulaire: Safran Nacelles, 76700 Gonfreville-l'Orcher (FR)
(72) Inventeur: PEYRON, Vincent, 77550 MOISSY CRAMAYEL (FR); BOUCHOUT, Jean-Nicolas, 77550 MOISSY CRAMAYEL (FR)
(74) Mandataire: Germain Maureau

(56) Documents cités:
- WO-A1-2018/015659
- FR-A1- 3 065 490
- US-A1- 2016 114 898
- 3m: "Cool under fire", 3M Thermal management fluids, 9 avril 2008 (2008-04-09), XP055645712, Extrait de l'Internet: URL:https://multimedia.3m.com/mws/media/56 9860O/3mtm-thermal-management-fluids-for-m ilitary-aerospace-apps.pdf [extrait le 2019-11-22]

## Description

La présente invention se rapporte au domaine des systèmes de refroidissement de turboréacteur pour aéronef.

Un aéronef est propulsé par un ou plusieurs ensembles propulsifs comprenant chacun un turboréacteur logé dans une nacelle. Chaque ensemble propulsif est rattaché à l'aéronef par un mât, également appelé pylône, situé généralement sous ou sur une aile ou au niveau du fuselage de l'aéronef.

Un turboréacteur peut également être appelé moteur. Dans la suite de la description, les termes moteur et turboréacteur seront utilisés indifféremment.

Une nacelle présente généralement une structure tubulaire comprenant une section amont comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

En outre, une nacelle comprend usuellement une structure externe comprenant une partie fixe et une partie mobile (moyens d'inversion de poussée), et une structure interne fixe, dite Inner Fixed Structure (IFS), concentrique de la structure externe. La structure interne fixe entoure le coeur du turboréacteur en arrière de la soufflante. Ces structures externe et interne définissent une veine annulaire d'écoulement, encore appelé veine secondaire, visant à canaliser un flux d'air froid, dit secondaire, qui circule à l'extérieur du turboréacteur.

La structure externe comporte un carénage externe définissant une surface aérodynamique externe, destinée à être au contact d'un flux d'air externe, et un carénage interne définissant une surface aérodynamique interne, destinée à être au contact du flux d'air secondaire. Les carénages interne et externe sont reliés en amont par une paroi de bord d'attaque formant lèvre d'entrée d'air.

De manière générale, le turboréacteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu dans le turboréacteur pour assurer une bonne lubrification de ces moyens de transmission et les refroidir. Le lubrifiant est de l'huile. Dans la suite de la description, on emploiera indifféremment les termes lubrifiant et huile.

Un système de refroidissement comportant un échangeur de chaleur permet de refroidir le lubrifiant.

Pour ce faire, une méthode connue consiste à refroidir le lubrifiant par circulation à travers un échangeur air/huile utilisant l'air froid de la veine secondaire de la nacelle ou d'un des premiers étages du compresseur pour refroidir l'huile moteur. Un tel échangeur est un échangeur à ailettes. Il comporte des ailettes dans le flux d'air froid qui perturbent l'écoulement du flux d'air dans la veine secondaire ou dans le compresseur, ce qui entraine des pertes de charges (traînée), et donc des pertes de performances pour l'aéronef en termes de consommation de carburant (paramètre FB (Fuel Burn)).

Une autre méthode connue consiste à refroidir le lubrifiant grâce à un système de refroidissement comprenant un échangeur air/huile utilisant de l'air froid prélevé à l'extérieur de la nacelle ou dans la veine secondaire, par une écope disposée respectivement sur le carénage externe ou interne de la nacelle, l'air froid étant mis en circulation à travers l'échangeur et pouvant servir au dégivrage de la nacelle une fois réchauffé par le lubrifiant, par circulation dans des conduits disposés au contact des parois de la structure externe de la nacelle, par exemple au niveau de la lèvre d'entrée d'air. Un tel système permet un meilleur contrôle des énergies thermiques échangées, mais la présence d'écopes dans le carénage externe ou interne de la nacelle entraîne une perte des performances aérodynamiques, de la même manière qu'un échangeur à ailettes, et donc des pertes de performances pour l'aéronef en termes de consommation de carburant (paramètre FB (Fuel Burn)).

Une solution connue afin de limiter les perturbations du flux d'air, consiste à fournir un système de refroidissement comportant un échangeur de chaleur, dit source chaude, entre un fluide caloporteur et l'huile moteur, et un échangeur de chaleur, dit source froide, entre le fluide caloporteur et de l'air. Un tel système de refroidissement comporte un conduit de circulation du fluide caloporteur en circuit fermé. Plus particulièrement, le conduit de circulation du fluide caloporteur comporte une portion disposée dans la nacelle au contact du carénage externe et/ou interne, ladite portion formant l'échangeur de chaleur source froide. On parle d'échangeur surfacique. Encore plus particulièrement, la portion disposée dans la nacelle au contact du carénage interne et/ou externe comporte une pluralité de canaux disposés en parallèle, lesdits canaux étant formés par une double paroi du carénage interne et/ou externe. On parle alors d'échangeur structural.

Ainsi, le couple puissance thermique dissipée et perte des performances aérodynamiques, ainsi que la masse embarquée sont optimisés. Des échangeurs de chaleur pour une nacelle d'un turboréacteur selon l'art antérieur sont divulgués dans les documents US 2016/114898, WO 2018/015659 et FR 3065490.

Un but de l'invention est de fournir un échangeur surfacique pour nacelle, qui permette d'optimiser le couple puissance thermique dissipée et perte des performances aérodynamiques, et la masse embarquée.

A cet effet, l'invention a pour objet un échangeur de chaleur surfacique pour nacelle de turboréacteur, entre un fluide à refroidir et de l'air, l'échangeur comprenant un conduit de circulation du fluide à refroidir disposé au contact de l'air, et étant caractérisé en ce que le conduit de circulation du fluide à refroidir comprend une pluralité de canaux s'étendant sensiblement dans une même direction avec une distance entre deux canaux adjacents comprise entre deux et cinq fois la largeur desdits canaux, chaque canal présentant une paroi comportant une zone destinée à être au contact de l'air et une zone opposée à la zone destinée à être au contact de l'air.

Ainsi, le nombre de canaux est optimisé de sorte que la puissance thermique dissipée, les pertes des performances aérodynamiques, et la masse embarquée, soient réduits.

Selon une caractéristique de l'invention selon la revendication 1, les canaux présentent une largeur comprise entre 5 et 50 mm, de préférence entre 6 et 20 mm et de préférence encore entre 10 et 15 mm.

Ainsi, le débit d'écoulement du fluide à refroidir est optimisé.

Selon d'autres caractéristiques de l'invention, l'échangeur selon l'invention comporte l'une ou plusieurs des caractéristiques optionnelles suivantes considérées seules ou selon toutes les combinaisons possibles.

Selon une caractéristique, la zone destinée à être au contact de l'air est lisse, par opposition à la zone opposée qui est ondulée.

Ainsi, la zone destinée à être ai contact de l'air est une surface aérodynamique.

Selon une caractéristique, la largeur des canaux est variable d'un canal à l'autre. Selon cette caractéristique, la distance entre deux canaux adjacents est comprise entre deux et cinq fois la largeur maximale desdits canaux.

Selon une caractéristique, la paroi des canaux présente une épaisseur comprise entre 0,6 et 4 mm.

Selon une caractéristique, la zone destinée à être au contact de l'air présente une épaisseur différente de la zone opposée.

Selon une caractéristique, au moins la zone destinée à être au contact de l'air présente une épaisseur comprise entre 1,5 et 4 mm. De cette façon les canaux sont aptes à résister à la foudre.

Ainsi, l'échangeur selon l'invention peut être disposé au contact de l'air externe d'une nacelle de turboréacteur d'aéronef.

Plus particulièrement, l'échangeur selon l'invention peut former au moins en partie le carénage externe d'une nacelle de turboréacteur d'aéronef.

En outre, l'échangeur selon l'invention peut être disposé au contact de l'air de la veine secondaire d'une nacelle de turboréacteur d'aéronef à l'aval de la veine secondaire. L'échangeur peut former au moins en partie la partie aval de la structure interne fixe d'une nacelle de turboréacteur d'aéronef.

Selon une caractéristique, la paroi des canaux présente une épaisseur comprise entre 1,5 et 4 mm.

Selon une caractéristique, au moins deux canaux présentent une épaisseur différente. Selon une caractéristique, les canaux présentent une section en forme de demi-cercle. Cela permet d'optimiser la tenue à la pression et les pertes de charge.

Selon une autre caractéristique, les canaux présentent une section de forme triangulaire. Cela permet de faciliter le formage des canaux, généralement réalisé par pliage et de minimiser la quantité de fluide à refroidir circulant dans l'échangeur. Selon une caractéristique l'échangeur comprend un fluide à refroidir dans le conduit de circulation, le fluide à refroidir étant un fluide caloporteur moins inflammable qu'un lubrifiant de turboréacteur, et liquide à des températures entre -70°C et +175°C. Par « moins inflammable qu'un lubrifiant de turboréacteur» on entend que le fluide caloporteur est inflammable à des températures supérieures par rapport au lubrifiant. Le lubrifiant étant généralement inflammable à 260°C, le fluide caloporteur est inflammable à des températures supérieures.

Selon une caractéristique, le fluide caloporteur est ininflammable.

Selon une caractéristique, le fluide caloporteur est liquide à des températures entre - 70°C et +175°C à des pressions inférieures à 10 bars.

Selon une caractéristique, le fluide caloporteur présente un point d'ignition supérieur à 260°C, un point de combustion supérieur à 280°C et une température d'allumage autogène supérieure à 400°C. Ainsi, l'échangeur peut être disposé à proximité d'équipements électriques.

Selon une caractéristique, le fluide caloporteur présente une constante diélectrique inférieure à 6.

Selon une caractéristique, le fluide caloporteur appartient à la famille des hydrofluoroéthers (HFE). De cette façon, le fluide est apte à rester à l'état liquide à des températures inférieures à 130°C à pression atmosphérique, et l'échangeur peut être disposé dans l'ensemble de la nacelle.

Selon une autre caractéristique, le fluide caloporteur appartient à la famille des esters de silicate.

Selon une caractéristique non revendiquée de l'invention, le fluide caloporteur est Novec^{™} 7500, également nommé Novec^{™} 7500 Engineered Fluid.

A titre d'exemple, la vitesse du fluide à refroidir dans un canal est de l'ordre de 0,5 à 2 m/s.

Selon une caractéristique, l'échangeur de chaleur est un échangeur surfacique dit source froide, et est destiné à coopérer avec un échangeur de chaleur dit source chaude entre un lubrifiant et le fluide à refroidir.

Selon cette caractéristique, le conduit de circulation du premier fluide à refroidir forme une boucle de recirculation à travers les échangeurs source froide et source chaude. Selon une caractéristique, au moins la zone opposée à la zone destinée à être au contact de l'air est en aluminium.

L'invention concerne également un système de refroidissement, comprenant un échangeur de chaleur tel que décrit précédemment, dit échangeur source froide, et un échangeur de chaleur dit source chaude, entre un lubrifiant à refroidir et le fluide refroidi dans l'échangeur source froide.

L'invention concerne en outre une nacelle de turboréacteur du type comportant une structure externe et une structure interne définissant une veine annulaire d'écoulement d'un flux d'air froid dit secondaire, la structure externe comportant un carénage externe définissant une surface aérodynamique externe et un carénage interne définissant une surface aérodynamique interne, les carénages externe et interne étant reliés en amont par une paroi de bord d'attaque formant lèvre d'entrée d'air, ladite nacelle comprenant un échangeur de chaleur tel que décrit précédemment. Selon une caractéristique, le conduit de circulation du fluide à refroidir comprend au moins une zone de circulation dudit fluide formé par une double paroi du carénage externe ou du carénage interne de la nacelle.

Par double paroi du carénage, on entend que la zone destinée à être au contact de l'air de chaque canal est formée par le carénage externe ou interne de la nacelle.

On parle alors d'échangeur structural.

Ainsi, l'échange de chaleur est avantageusement réalisé par convection avec l'air extérieur ou le flux d'air froid secondaire, et plus particulièrement par convection forcée.

D'autres caractéristiques et avantages de la présente invention apparaîtront à la lecture de la description qui va suivre et à l'examen des figures annexées dans lesquelles :
[Fig. 1] est une vue schématique d'une nacelle de turboréacteur d'aéronef comprenant un échangeur surfacique selon l'invention,
[Fig. 2] est une vue schématique d'un système de refroidissement comprenant un échangeur surfacique selon l'invention,
[Fig. 3] est une vue schématique d'une partie de la nacelle de la figure 1, comportant l'échangeur surfacique selon l'invention,
[Fig. 4] est une vue schématique en coupe longitudinale de la figure 3, la partie de nacelle étant représentée plane,
[Fig. 5] est une vue schématique d'une variante de la figure 4.

Dans la description qui va suivre et dans les revendications, des composants identiques, similaires ou analogues seront désignés par les mêmes chiffres de référence et on emploiera les termes « amont », « aval », etc. à titre non limitatif et en référence aux dessins afin de faciliter la description.

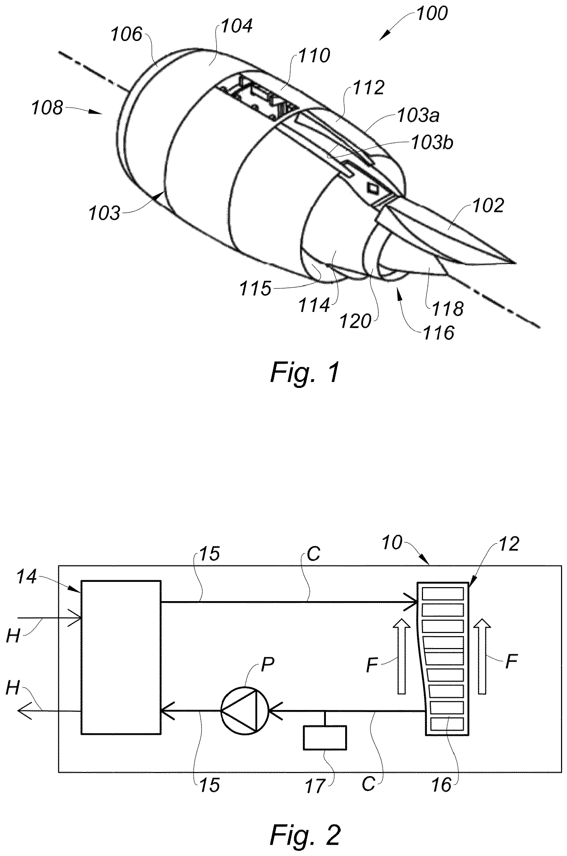

La figure 1 illustre une nacelle 100 suspendue à un pylône 102 destiné à être fixé à une aile (non représentée) d'un aéronef (non représenté). La nacelle 100 comprend une structure externe 103 comprenant une section amont 104 dotée d'une lèvre 106 formant une entrée d'air 108, une section médiane 110, et une section aval 112.

La nacelle comprend en outre une structure interne fixe 114 entourant une partie aval d'un turboréacteur (non représenté) de manière concentrique par rapport à la section aval 112. La structure interne fixe 114 et la structure externe 103 délimitent une veine annulaire 115 définissant un passage pour un flux d'air secondaire (non représenté) froid.

La nacelle 100 comprend également une tuyère d'éjection 116 comprenant un cône d'éjection 118 de gaz et une buse d'éjection 120 de gaz. Le cône d'éjection 118 et la buse d'éjection 120 définissent un passage pour un flux d'air chaud (non représenté) sortant du turboréacteur (non représenté)200.

La structure externe 103 comporte un carénage externe 103a définissant une surface aérodynamique externe, et un carénage interne 103b définissant une surface aérodynamique interne, les carénages externe 103a et interne 103b étant reliés en amont par une paroi de bord d'attaque (non représentée) formant la lèvre 106 d'entrée d'air 108.

La nacelle comprend un échangeur surfacique dit échangeur source froide 12 (figure 2) entre un fluide caloporteur C (figure 2) à refroidir et un flux d'air froid F (figure 2).

L'échangeur source froide 12 est disposé dans la structure externe 103. Il est destiné à coopérer avec un échangeur dit source chaude 14 (figure 2) entre un lubrifiant H (figure 2) moteur à refroidir et le fluide caloporteur C, par l'intermédiaire d'un conduit de circulation 15 (figure 2) de fluide caloporteur C.

L'échangeur source chaude 14 est disposé dans le turboréacteur (non représenté).

L'ensemble échangeur source froide 12 et échangeur source chaude 14 forme un système de refroidissement 10 (figure 2) du lubrifiant H moteur.

La figure 2 illustre le système de refroidissement 10 du lubrifiant H moteur.

Le système de refroidissement 10 comprend l'échangeur source froide 12 et l'échangeur source chaude 14.

Le fluide caloporteur C circule dans le conduit de circulation 15 et dans l'échangeur source froide 12 où il est refroidi par de l'air froid F. Le fluide caloporteur C ainsi refroidi circule alors dans l'échangeur source chaude 14 où il est réchauffé par le lubrifiant H moteur.

Ainsi, le fluide caloporteur C refroidi par l'échangeur source froide permet de refroidir le lubrifiant H moteur.

Le fluide caloporteur C est destiné à circuler à la fois dans l'échangeur source froide 12 et dans l'échangeur source chaude 14.

Une pompe P permet la circulation du fluide caloporteur C entre l'échangeur source froide 12 et l'échangeur source chaude 14.

Un vase d'expansion 17 permet d'accommoder la variation de volume de fluide caloporteur C sous l'effet de la température.

Le vase d'expansion 17 est un réservoir fermé. Ainsi, la pression dans le vase d'expansion 17 est directement liée au volume occupé par le fluide caloporteur dans le vase d'expansion. Cette caractéristique permet avantageusement de maîtriser une pression maximale et/ou minimale dans certaines portions du conduit de circulation 15 du fluide caloporteur en jouant uniquement sur la capacité (volume) du vase d'expansion 17.

Le vase d'expansion 17 est rempli de fluide caloporteur C et d'un volume sans fluide caloporteur, nommé ciel gazeux, qui fait office de tampon. Il permet de limiter la pression dans le conduit de circulation 15 du fluide caloporteur lors de la dilatation du fluide en fonction de la température.

Le vase d'expansion 17 est un moyen de pressurisation.

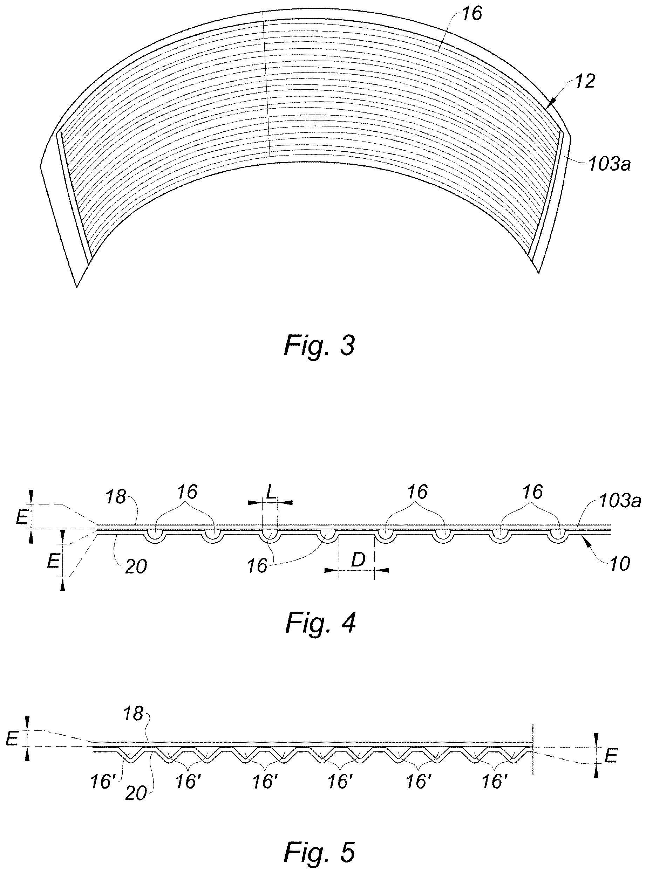

La figure 3 illustre le carénage externe 103a au niveau de la section aval 112 d'une nacelle 100 (figure 1) comportant un échangeur source froide 12.

L'échangeur source froide 12 comprend une pluralité de canaux 16 disposés en parallèle, dans lesquels circule le fluide caloporteur C (figure 2). Les canaux 16 sont disposés au contact du carénage externe 103a.

Le carénage externe 103a étant au contact d'un flux d'air extérieur froid, l'échange de chaleur est réalisé par convection avec le flux d'air extérieur froid.

Dans une variante non représentée, l'échangeur source froide 12 est disposé au contact du carénage externe 103a au niveau de la section amont 104 ou médiane 110 de la nacelle 100 (figure 1).

La figure 4 montre que les canaux 16 sont formés par une double paroi 18, 20 du carénage externe 103a. Ainsi, l'échangeur 12 forme au moins en partie le carénage externe 103a. On parle d'échangeur structural.

La double paroi 18, 20 comporte une zone 18 destinée à être au contact de l'air externe et une zone opposée 20 à la zone 18 destinée à être au contact de l'air externe. La zone 18 destinée à être au contact de l'air externe est lisse. On parle de surface aérodynamique. La zone opposée 20 est ondulée.

Les canaux 16 présentent une section en forme de demi-cercle et une largeur L de l'ordre de 10 mm, et la distance D entre les canaux 16 est de l'ordre de 30 mm.

Ainsi, la distance D entre les canaux 16 est comprise entre deux et cinq fois la largeur L desdits canaux 16.

Chaque paroi 18, 20 des canaux 16 présente une épaisseur E de l'ordre de 2 mm. De cette façon, la zone 18 destinée à être au contact de l'air externe est apte à résister à la foudre.

La figure 5 illustre une variante de canaux 16' dans laquelle les canaux 16' présentent une section de forme triangulaire.

Les canaux 16' selon cette variante de réalisation sont formés par une double paroi 18, 20 du carénage externe 103a.

De la même manière que précédemment, la double paroi 18, 20 comporte une zone 18 destinée à être au contact de l'air externe et une zone opposée 20 à la zone 18 destinée à être au contact de l'air externe. La zone 18 destinée à être au contact de l'air externe est lisse. On parle de surface aérodynamique. La zone opposée 20 est ondulée.

Les canaux 16' présentent en outre une largeur L de l'ordre de 10 mm, et la distance D entre les canaux 16' est de l'ordre de 30 mm.

Ainsi, la distance D entre les canaux 16' est comprise entre deux et cinq fois la largeur L desdits canaux 16'.

Chaque paroi 18, 20 des canaux 16' présente une épaisseur E de l'ordre de 2 mm. De cette façon, la zone 18 destinée à être au contact de l'air externe est apte à résister à la foudre.

Dans une variante non représentée, la zone opposée 20 présente une épaisseur E comprise entre 0,6 et 1,5 mm. En effet, la zone opposée 20 n'est pas impactée par la foudre.

Dans un mode de réalisation non représenté, l'échangeur source froide 12 comprend une pluralité de canaux 16 disposés en parallèle, dans lesquels circule le fluide caloporteur C, les canaux 16 étant disposés au contact du carénage interne 103b (figure 1). Dans ce mode de réalisation, l'échange de chaleur est réalisé par convection avec le flux d'air froid secondaire. La zone 18 destinée à être au contact de l'air est alors destinée à être au contact de l'air de la veine secondaire. De la même manière que précédemment, la zone 18 destinée à être au contact de l'air de la veine secondaire est lisse. On parle de surface aérodynamique.

Dans ce mode de réalisation, la paroi 18, 20 présente une épaisseur E comprise entre 0,6 et 1,5 mm. En effet, la paroi 18, 20 n'est pas impactée par la foudre.

Dans un autre mode de réalisation non représenté, l'échangeur source froide 12 est disposé au contact du carénage externe 103a et du carénage interne 103b et l'échange de chaleur est réalisé par convection avec le flux d'air froid extérieur et le flux d'air froid secondaire.

## Revendications

1. Echangeur de chaleur surfacique (12) pour nacelle de turboréacteur, entre un fluide à refroidir (C) et de l'air (F), l'échangeur (12) comprenant un conduit de circulation (15) du fluide à refroidir (C) disposé au contact de l'air, et étant **caractérisé en ce que** le conduit de circulation (15) du fluide à refroidir comprend une pluralité de canaux (16, 16') s'étendant sensiblement dans une même direction avec une distance (D) entre deux canaux (16, 16') adjacents comprise entre deux et cinq fois la largeur (L) desdits canaux (16, 16'), chaque canal (16, 16') présentant une paroi (18, 20) comportant une zone destinée à être au contact de l'air (18) et une zone opposée (20) à la zone destinée à être au contact de l'air, dans lequel les canaux (16, 16') présentent une largeur (L) comprise entre 5 et 50 mm, de préférence entre 6 et 20 mm et de préférence encore entre 10 et 15 mm.

2. Echangeur selon la revendication précédente, dans lequel la largeur (L) des canaux (16, 16') est variable d'un canal à l'autre.

3. Echangeur selon la revendication précédente, dans lequel la distance (D) entre deux canaux (16, 16') adjacents est comprise entre deux et cinq fois la largeur (L) maximale desdits canaux (16, 16').

4. Echangeur selon l'une quelconque des revendications précédentes, dans lequel la paroi (18, 20) des canaux (16, 16') présente une épaisseur (E) comprise entre 0,6 et 4 mm.

5. Echangeur selon l'une quelconque des revendications précédentes, dans lequel au moins la zone destinée à être au contact de l'air (18) présente une épaisseur (E) comprise entre 1,5 et 4 mm.

6. Echangeur selon l'une quelconque des revendications précédentes, dans lequel les canaux (16, 16') présentent une section en forme de demi-cercle ou de forme triangulaire.

7. Echangeur selon l'une quelconque des revendications précédentes, comprenant un fluide à refroidir (C) dans le conduit de circulation (15), le fluide à refroidir (C) étant un fluide caloporteur moins inflammable qu'un lubrifiant de turboréacteur, et liquide à des températures entre -70°C et +175°C.

8. Echangeur selon la revendication précédente, dans lequel le fluide caloporteur est ininflammable, notamment à des températures entre -70°C et +175°C à des pressions de 10 bars.

9. Echangeur selon l'une quelconque des revendications précédentes, dans lequel au moins la zone opposée (20) à la zone destinée à être au contact de l'air (18) est en aluminium.

10. Système de refroidissement (10), comprenant un échangeur de chaleur (12) selon l'une quelconque des revendications précédentes, dit échangeur source froide (12), et un échangeur de chaleur dit source chaude (14) entre un lubrifiant (H) à refroidir et le fluide (C) refroidi dans l'échangeur source froide (12).

11. Nacelle (100) de turboréacteur du type comportant une structure externe (103) et une structure interne (114) définissant une veine annulaire (115) d'écoulement d'un flux d'air froid dit secondaire, la structure externe (103) comportant un carénage externe (103a) définissant une surface aérodynamique externe et un carénage interne (103b) définissant une surface aérodynamique interne, les carénages externe (103a) et interne (103b) étant reliés en amont par une paroi de bord d'attaque formant lèvre (106) d'entrée d'air (108), ladite nacelle (100) comprenant un échangeur de chaleur (12) selon l'une quelconque des revendications 1 à 9.

12. Nacelle selon la revendication précédente, dans laquelle le conduit de circulation (15) du fluide à refroidir (C) comprend au moins une zone de circulation dudit fluide (C) formé par une double paroi (18, 20) du carénage externe (103a) ou du carénage interne (103b) de la nacelle.

## Patentansprüche

1. Oberflächenwärmetauscher (12) für eine Turbotriebwerksgondel zwischen einer zu kühlenden Flüssigkeit (C) und Luft (F), wobei der Tauscher (12) eine Zirkulationsleitung (15) der zu kühlenden Flüssigkeit (C) umfasst, die in Kontakt mit der Luft angeordnet ist, und **dadurch gekennzeichnet ist, dass** die Zirkulationsleitung (15) der zu kühlenden Flüssigkeit eine Vielzahl von Kanälen (16, 16') umfasst, die sich im Wesentlichen in einer selben Richtung in einem Abstand (D) zwischen zwei angrenzenden Kanälen (16, 16') erstrecken, der zwischen zwei und fünf Mal der Breite (L) der Kanäle (16, 16') liegt, wobei jeder Kanal (16, 16') eine Wand (18, 20) aufweist, die eine Zone beinhaltet, die dazu bestimmt ist, in Kontakt mit der Luft (18) zu sein, und eine entgegengesetzte Zone (20) zur Zone, die dazu bestimmt ist, in Kontakt mit der Luft zu sein, wobei die Kanäle (16, 16') eine Breite (L) aufweisen, die zwischen 5 und 50 mm, vorzugsweise zwischen 6 und 20 mm und noch bevorzugter zwischen 10 und 15 mm liegt.

2. Tauscher nach dem vorstehenden Anspruch, wobei die Breite (L) der Kanäle (16, 16') von einem Kanal zum anderen variabel ist.

3. Tauscher nach dem vorstehenden Anspruch, wobei der Abstand (D) zwischen zwei angrenzenden Kanälen (16, 16') zwischen zwei und fünf Mal der maximalen Breite (L) der Kanäle (16, 16') liegt.

4. Tauscher nach einem der vorstehenden Ansprüche, wobei die Wand (18, 20) der Kanäle (16, 16') eine Dicke (E) aufweist, die zwischen 0,6 und 4 mm liegt.

5. Tauscher nach einem der vorstehenden Ansprüche, wobei mindestens die Zone, die dazu bestimmt ist, in Kontakt mit der Luft (18) zu sein, eine Dicke (E) aufweist, die zwischen 1,5 und 4 mm liegt.

6. Tauscher nach einem der vorstehenden Ansprüche, wobei die Kanäle (16, 16') einen Querschnitt in Form eines Halbkreises oder in dreieckiger Form aufweisen.

7. Tauscher nach einem der vorstehenden Ansprüche, eine zu kühlende Flüssigkeit (C) in der Zirkulationsleitung (15) umfassend, wobei die zu kühlende Flüssigkeit (C) eine Wärmeträgerflüssigkeit ist, die weniger brennbar als ein Turbotriebwerksschmierstoff, und bei Temperaturen zwischen -70 °C und +175 °C flüssig ist.

8. Tauscher nach dem vorstehenden Anspruch, wobei die Wärmeträgerflüssigkeit insbesondere bei Temperaturen zwischen -70 °C und +175 °C, bei Drücken von 10 bar brennbar ist.

9. Tauscher nach einem der vorstehenden Ansprüche, wobei mindestens die entgegengesetzte Zone (20) zur Zone die dazu bestimmt ist, in Kontakt mit der Luft (18) zu sein, aus Aluminium ist.

10. Kühlsystem (10), das einen Wärmetauscher (12) nach einem der vorstehenden Ansprüche, Kältequellentauscher (12) genannt, und einen sogenannten Wärmequellenwärmetauscher (14) zwischen einem zu kühlenden Schmierstoff (H) und der Flüssigkeit (C), die in dem Kältequellentauscher (12) gekühlt wird, umfasst.

11. Turbotriebwerksgondel (100) in der Art eine externe Struktur (103) und eine interne Struktur (144) beinhaltend, die eine ringförmige Strömungsbahn (115) eines sogenannten sekundären Kaltluftflusses definieren, wobei die externe Struktur (103) eine externe Verkleidung (103a) beinhaltet, die eine aerodynamische externe Oberfläche definiert, und eine interne Verkleidung (103b), die eine aerodynamische interne Oberfläche definiert, wobei die externe (103a) und interne Verkleidung (103b) stromaufwärts durch eine Vorderkantenwand, die eine Lippe (106) eines Lufteinlasses (108) bildet, verbunden sind, wobei die Gondel (100) einen Wärmetauscher (12) nach einem der Ansprüche 1 bis 9 umfasst.

12. Gondel nach dem vorstehenden Anspruch, wobei die Zirkulationsleitung (15) der zu kühlenden Flüssigkeit (C) mindestens eine Zirkulationszone der Flüssigkeit (C) umfasst, die durch eine Doppelwand (18, 20) der externen Verkleidung (103a) oder der internen Verkleidung (103b) der Gondel gebildet wird.

## Claims

1. A surface heat-exchanger (12) for a turbojet engine nacelle, between a fluid (C) to be cooled down and air (F), the heat-exchanger (12) comprising a circulation duct (15) of the fluid (C) to be cooled down disposed in contact with air, and being **characterized in that** the circulation duct (15) of the fluid to be cooled down comprises a plurality of channels (16, 16') extending substantially in a same direction with a distance (D) between two adjacent channels (16, 16') comprised between twice and five times the width (L) of said channels (16, 16'), each channel (16, 16') having a wall (18, 20) comprising an area intended to be in contact with air (18) and an area (20) opposite to the area intended to be in contact with air, wherein the channels (16, 16') have a width (L) comprised between 5 and 50 mm, preferably between 6 and 20 mm and more preferably between 10 and 15 mm.

2. The heat-exchanger according to the preceding claim, wherein the width (L) of the channels (16, 16') is variable from one channel to another.

3. The heat-exchanger according to the preceding claim, wherein the distance (D) between two adjacent channels (16, 16') is comprised between twice and five times the maximum width (L) of said channels (16, 16').

4. The heat-exchanger according to any one of the preceding claims, wherein the wall (18, 20) of the channels (16, 16') has a thickness (E) comprised between 0.6 and 4 mm.

5. The heat-exchanger according to any one of the preceding claims, wherein at least the area intended to be in contact with air (18) has a thickness (E) comprised between 1.5 and 4 mm.

6. The heat-exchanger according to any one of the preceding claims, wherein the channels (16, 16') have a semi-circular shaped section or triangular-shaped section.

7. The heat-exchanger according to any one of the preceding claims, comprising a fluid (C) to be cooled down in the circulation duct (15), the fluid (C) to be cooled down being a heat-transfer fluid less flammable than a lubricant of the turbojet engine, and liquid at temperatures between -70°C and +175°C.

8. The heat-exchanger according to the preceding claim, wherein the heat-transfer fluid is nonflammable, in particular at temperatures between -70°C and +175°C at 10 bars pressures.

9. The heat-exchanger according to any one of the preceding claims, wherein at least the area (20) opposite to the area intended to be in contact with air (18) is made of aluminum.

10. A cooling system (10), comprising a heat-exchanger (12) according to any one of the preceding claims, called cold source heat-exchanger (12), and a so-called hot source heat-exchanger (14) between a lubricant (H) to be cooled down and the fluid (C) cooled down in the cold source heat-exchanger (12).

11. A turbojet engine nacelle (100) of the type comprising an outer structure (103) and an inner structure (114) defining an annular flow path (115) for a so-called secondary cold air flow, the outer structure (103) comprising an outer fairing (103a) defining an outer aerodynamic surface and an inner fairing (103b) defining an inner aerodynamic surface, the outer (103a) and inner (103b) fairings being connected upstream by a leading edge wall forming an air inlet (108) lip (106); said nacelle (100) comprising a heat-exchanger (12) according to any one of claims 1 to 9.

12. The nacelle according to the preceding claim, wherein the circulation duct (15) of the fluid (C) to be cooled down comprises at least one circulation area of said fluid (C) formed by a double-wall (18, 20) of the outer fairing (103a) or of the inner fairing (103b) of the nacelle.
